# EUROPEAN PATENT SPECIFICATION

(11) **EP 3 742 028 B1**
(45) Date of publication and mention of the grant of the patent: **30.06.2021**
(21) Application number: 19175637.8
(22) Date of filing: 21.05.2019
(51) Int. Cl.: F16K 1/44, F01D 17/14, F16K 11/16, F16K 11/07

(54) **PROTECTION AGAINST ROTATION FOR VALVE SPINDLES**
SCHUTZ GEGEN DIE DREHUNG FÜR VENTILSPINDELN
PROTECTION CONTRE LA ROTATION DE BROCHES DE SOUPAPE

(43) Date of publication of application: 25.11.2020
(73) Proprietor: Siemens Energy Global GmbH & Co. KG, 81739 München (DE)
(72) Inventor: Koktavy, David, 62100 Brno (CZ)

(56) References cited:
- EP-A1- 3 431 840

## Description

The invention relates to a valve spindle arrangement comprising a first valve spindle and a first bush, wherein the first valve spindle and the first bush are arranged so as to be displaceable relative to one another in a longitudinal direction, further comprising at least one feather key which is arranged on the first valve spindle, wherein the feather key projects in a recess of the bush in such a way that a rotation of the first valve spindle and of the bush with respect to one another is prevented.

Such valve spindle arrangements are used, for example, for valves which are used in steam turbines. Such valves perform the task of changing the volumetric flow of a steam to a steam turbine. Known in this connection are so-called quick-closing and regulating valves. Quick-closing valves are designed to prevent the feed of steam from a steam generator to a steam turbine in a comparatively quick manner, this possibly occurring in a disturbance situation, for example. Additionally known are regulating valves which perform the task of changing the feed of steam, or the volumetric flow of the steam, from the steam generator to the steam turbine in such a way that an optimum amount of steam is available to the steam turbine.

As a general rule, the valves are designed for application in steam turbine construction in such a way that a steam cone is arranged so as to be movable by a valve spindle and bears against a valve seat in the closed state. In operation, the valve cone is moved, inter alia, via the valve spindle away from the valve cone, with the result that a fluidic connection is formed between a valve inlet and a valve outlet, with the result that steam can flow from the valve inlet to the valve outlet.

Moreover, still further embodiments of steam turbine valves are known, such as, for example, double seat steam turbine valves. Here, in principle, two valve cones are formed which each bear against a valve seat. The valve spindle exerts a movement in one direction, making possible a flow of steam on the respective valve cone. Such combinations of valve spindle and valve cones are usually guided at a terminal end within a bush. Since this relative movement of the valve spindle and the bush takes place at high temperatures and at critical steam parameters, it is possible that the relative movement between the valve spindle and the bush does not always occur in a friction-free manner. Jamming is sometimes possible, with the result that the valve cone cannot be moved further.

EP 3 431 840 A1 discloses a valve spindle arrangement according to the preamble of claim 1.

It would therefore be desirable to have a possibility which demonstrates good movability of the valve spindle within a bush while also effectively preventing a rotation of the valve spindle.

The invention comes in at this point. It is an object of the invention to specify a valve spindle arrangement which allows movability of the valve spindles even during critical states.

This object is achieved by a valve spindle arrangement comprising a first valve spindle and a first bush, wherein the first valve spindle and the first bush are arranged so as to be displaceable relative to one another in a longitudinal direction, further comprising at least one feather key which is arranged on the first valve spindle, wherein the feather key projects in a recess of the bush in such a way that a rotation of the first valve spindle and of the bush with respect to one another is prevented, wherein the first valve spindle is formed from a first valve spindle material, and the first bush is formed from a first bush material, and the feather key is formed from a feather key material, wherein the feather key material is different from the first valve spindle material and/or the first bush material.

The invention follows the approach that a feather key can be arranged in a recess of the first valve spindle, with the result that, after a certain use time, the feather key can be removed from the valve spindle and be exchanged in a service case, wherein the feather key is formed from a suitable material. Consequently, a frictionless movement of the valve spindle within the bush is possible after exchanging the feather keys or after reconditioning the feather keys.

Advantageous developments are specified in the subclaims.

In a first advantageous development, the feather key material has a greater hardness than the first bush material and/or the first valve spindle material.

As a result, wedging or sticking of the feather key in the bush is effectively avoided.

In a further advantageous embodiment, the feather key material has a hardness which is greater by 20% to 40%, in particular 25% to 35%, than the first bush material and the first valve spindle material.

The material from the feather key is made from a material with a hard surface and is suitable for high temperatures above 500°C.

The feather key is advantageously formed from stellite.

Furthermore, the bush material is likewise advantageously formed from stellite.

In a further advantageous development, the stellite has the following composition:

| | |
|---|---|
| Cr: | 25 to 30% by weight |
| Mo: | max. 1% by weight |
| W: | 2 to 15% by weight |
| C: | 0.25 to 3.3% by weight |
| Fe: | max. 3% by weight |
| Ni: | max. 3% by weight |
| Si: | max. 2% by weight |
| Mn: | max. 1% by weight |

In a further advantageous development, the first valve spindle has a recess in which the feather key is arranged.

A possibility is thereby provided of quickly removing the feather key from the first valve spindle for servicing purposes. The feather key can subsequently be cleaned if the surface of the feather key has changed. Such design allows to combine two materials in one part.

In an advantageous development, the recess is formed in such a way that the feather key is not displaceable in the longitudinal direction relative to the first valve spindle.

In an advantageous development, the first valve spindle has a second feather key, wherein the second feather key is arranged opposite to the feather key.

As a result, a rotation of the valve spindle with respect to the bush is effectively prevented.

In a further advantageous development, the bush is arranged in a second valve spindle.

The bush is advantageously connected to the second valve spindle in such a way that a rotation of the bush relative to the second valve spindle is prevented.

This can occur by welding, by shrink-fitting or by a thread between the bush and the second valve spindle.

In a further advantageous development, at least one pin for securing is arranged between the bush and the second valve spindle.

As a result, an unwanted release of the bush from the second valve spindle is effectively prevented.

In a further advantageous development, the second valve spindle is provided on the end side with feather springs which engages in a second bush in such a way that a rotation is prevented.

The function of the spring is to ensure closing force of the valve spindle. A further function of the spring is to prevent an unwanted release of the bush.

Moreover, the second valve spindle comprises a valve cone which bears against a valve seat. Such a valve spindle arrangement is designed to open two steam flow lines to a steam turbine. Here, the first valve spindle comprises two valve cones which opens the first line to the steam turbine, and the second valve spindle comprises a further valve cone which opens the second line to the steam turbine.

The second bush is advantageously fixedly connected to a valve housing.

In an advantageous development, the feather key of the second valve spindle is formed from a second feather key material, and the second bush is formed from a second bush material, wherein the second feather key material has a greater hardness than the second bush material and/or the second valve spindle material.

The second feather key material advantageously has a hardness which is greater by 20% to 40%, in particular 25% to 35%, than the second bush material and/or the valve spindle material.

In an advantageous development, the feather key is formed from stellite.

The second bush is advantageously formed from stellite.

In a further advantageous development, the stellite of the second bush material has the following composition:

| | |
|---|---|
| Cr: | 25 to 30% by weight |
| Mo: | max. 1% by weight |
| W: | 2 to 15% by weight |
| C: | 0.25 to 3.3% by weight |
| Fe: | max. 3% by weight |
| Ni: | max. 3% by weight |
| Si: | max. 2% by weight |
| Mn: | max. 1% by weight |

In an advantageous development, a sleeve is arranged on the first valve spindle between the first bush and the first valve spindle, wherein the sleeve is formed from a material which has a greater hardness than the material from which the first valve spindle is formed.

This measure serves as it were to protect the surface of the first valve spindle. The sleeve prevents rubbing of the bush on the surface of the first valve spindle.

In a further advantageous development, a second sleeve is arranged on the second valve spindle between the second bush and the second valve spindle, wherein the second sleeve is formed from a material which has a greater hardness than the material from which the second valve spindle is formed.

Here, too, the surface of the second valve spindle is protected from destruction during the movement within the second bush by virtue of the fact that a sleeve is arranged on the surface, between the feather keys.

In a further advantageous development, the feather key is arranged releasably on the first valve spindle and/or second valve spindle.

The above-described properties, features and advantages of this invention and the manner in which they are achieved will become clearer and better understandable in conjunction with the following description of the exemplary embodiments which are explained in more detail in conjunction with the drawings.

Here, identical components or components having an identical function are designated by identical reference signs.

Exemplary embodiments of the invention are described below with reference to the drawings.

This drawing is not intended to definitively represent the exemplary embodiments but rather is implemented, where it is useful for explanation, in a schematic and/or slightly distorted form. With regard to additions to the teachings which are directly evident from the drawing, reference is made to the relevant prior art.

In the drawing:
- fig. 1: shows a perspective illustration of a valve arrangement having two double seat valves;
- fig. 2: shows an enlarged illustration of a detail from fig. 1;
- fig. 3: shows an enlarged illustration of a detail from fig. 2;
- fig. 4: shows a cross-sectional view of a valve spindle according to the invention;
- fig. 5: shows a cross-sectional view of a valve spindle acc ording to the prior art;
- fig. 6: shows a perspective illustration of a detail from fig. 1;
- fig. 7: shows a perspective illustration of a second valve spindle;
- fig. 8: shows an enlarged illustration of a detail from fig. 7; and
- fig. 9: shows a perspective view of a valve housing with bush.

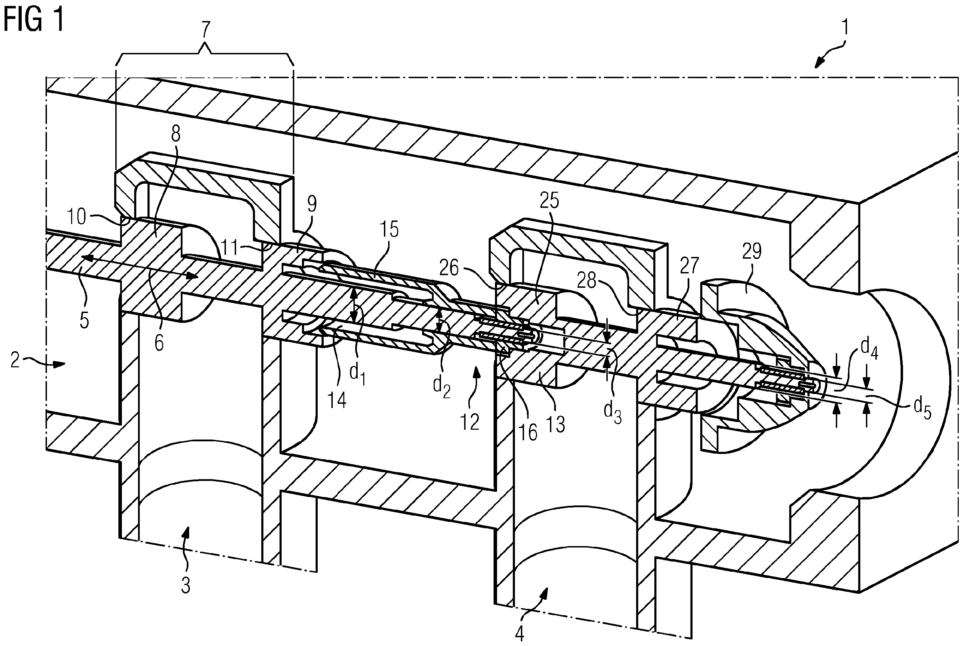

Fig. 1 shows a perspective arrangement of a valve spindle arrangement 1. The valve spindle arrangement 1 comprises an inflow region 2. A steam, which is generated, for example, in a steam generator, flows into the inflow region 2. This steam generally has very high temperatures and high pressures. Furthermore, the valve spindle arrangement 1 comprises a first outflow region 3 and a second outflow region 4. In the opened position of the valve spindle arrangement 1, the steam flows from the inflow region 2 into the first outflow region 3 and into the second outflow region 4.

The steam flows from the inflow region 2 first to the first outflow region 3. This occurs via the movement of a first valve spindle 5. This valve spindle 5 is moved along a longitudinal direction 6. To open a first valve 7, the first valve spindle 5 is moved from left to right, as can be seen in figure 1. Arranged on the first valve spindle 5 is a first valve cone 8 and, behind it, a second valve cone 9. In the closed state, the first valve cone 8 and the second valve cone 9 bear in contact with a first valve seat 10 and second valve seat 11, respectively. If the first valve spindle 5 is moved from left to right, an annular surface thereby opens between the first valve cone 8 and the first valve seat 10, and a further annular surface opens between the second valve cone 9 and the second valve seat 11. As a result, a steam flows between the valve seat 10 and the first valve cone 8 from the inflow region 2 into the first outflow region 3. A steam likewise flows from the inflow region 2 through the gap between the second valve cone 9 and the second valve seat 11 into the first outflow region 3.

Here, the terminal end 12 of the valve spindle 5 projects into a second valve spindle 13. Here, the second valve spindle 13 has a cavity 14 in which the terminal end 12 of the first valve spindle 5 projects and can move within the cavity 14.

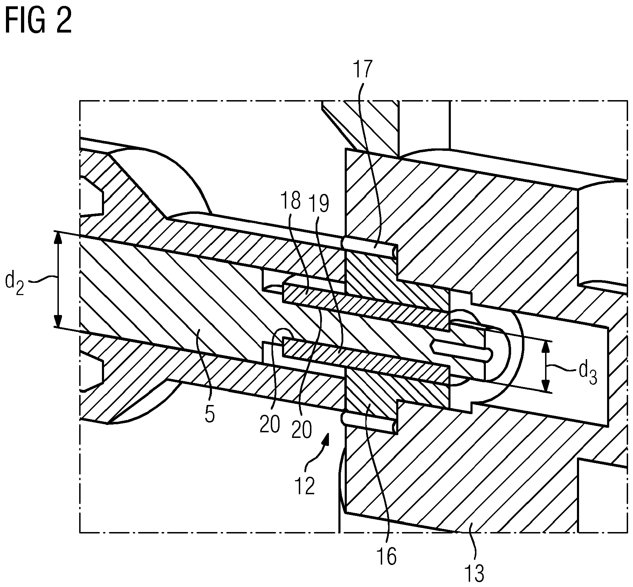

The valve spindle 5 comprises a portion with a diameter d1. Following this portion is a portion with a smaller diameter d2. After the portion with the diameter d2 there follows a further portion with the diameter d3. The portion with the diameter d3 is explained in more detail in fig. 2.

Around the valve spindle 5 is arranged a movable casing 15. The casing 15 has a spacing from the valve spindle 5 and is arranged in the region with the diameter d1 and partially also in the region with the diameter d2. In the region with the diameter d3, the casing 15 bears more or less in contact with the valve spindle 5. A spring (not shown) is arranged in the cavity 14 between the casing 15 and the second valve cone 9. The spring force of this spring results in the casing 15 being pressed against the second valve spindle 13. If the valve spindle 5 is moved from left to right, the first valve spindle 5 moves at first relative to the second valve spindle 13. The second valve spindle 13 is at first stationary. The terminal end 12 of the first valve spindle 5 is arranged within a bush 16 in such a way that the valve spindle 5 is movable relative to the first bush 16. The first bush 16 is in turn fixedly connected to the second valve spindle 13. This can occur by a thread between the first bush 16, a welded connection or a shrink fit between the first bush 16 and the second valve spindle 13. A release of the first bush 16 is prevented by a pin 17. This pin 17 is arranged between the first bush 16 and the second valve spindle 13. The pin 17 is secured against release by casing 15.

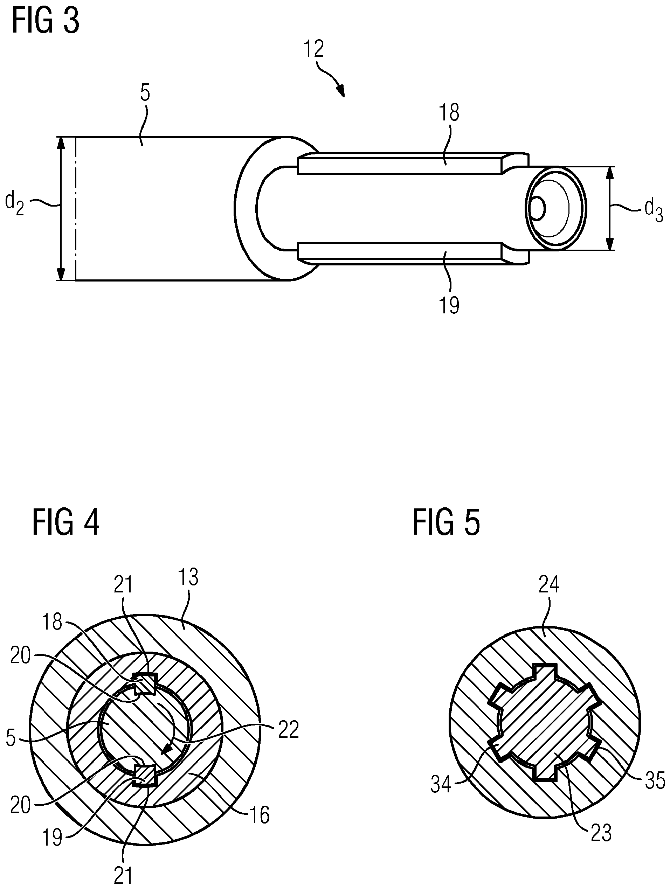

Fig. 3 shows a perspective illustration of the terminal end 12 of the first valve spindle 5. As can be seen in fig. 3, the valve spindle 5 comprises a first feather key 18. In a further embodiment, a second feather key 19 is arranged opposite to the first feather key 18. The first feather key 18 and the second feather key 19 are formed from a harder material than the material of the first valve spindle 5. Here, the first feather key 18 and the second feather key 19 are arranged in recesses 20 (not illustrated in fig. 3 but indicated in fig. 2). The mode of operation of the movement between the first valve spindle 5 and the first bush 16 becomes clear in figure 4. Fig. 4 shows a cross-sectional view of the valve spindle 5 and of the first bush 16. As can be seen in fig. 4, the first feather key 18 is arranged in a recess 20 which is arranged in the first valve spindle 5. The first feather key 18 is releasably inserted in this recess 20. As can be seen in fig. 4, a part of the first feather key 18 here projects from the surface of the first valve spindle 5. The part which projects here engages in a recess 21 in the first bush 16. A relative movement of the terminal end 12 of the first valve spindle 5 in a direction of rotation 22 is thereby prevented, wherein there is also preventing of rotation in other direction. Here, the material of the first feather key 18 and of the second feather key 19 is harder than the material of the first valve spindle 5 and of the first bush 16. Here, the material of the feather key 18 and of the feather key 19 is a stellite. The composition of stellite is here:

| | |
|---|---|
| Cr: | 25 to 30% by weight |
| Mo: | max. 1% by weight |
| W: | 2 to 15% by weight |
| C: | 0.25 to 3.3% by weight |
| Fe: | max. 3% by weight |
| Ni: | max. 3% by weight |
| Si: | max. 2% by weight |
| Mn: | max. 1% by weight |

A sleeve (not shown), which likewise consists of a material which is harder than the material of the second bush 33 and the material of the first valve spindle 5, is arranged on the surface of the terminal end 12 of the first valve spindle 5 between the first feather key 18 and the second feather key 19. The sleeve is (in a manner not shown) arranged substantially in contact with the first bush 16.

Fig. 5 shows a cross-sectional view of a terminal end of a valve spindle 23, according to the prior art. Here, the valve spindle 23 has a total of six projections 34 which project into corresponding recesses 35 of a second valve spindle 24. A disadvantage with this design is that, with increasing duration, sticking or jamming between the valve spindle 23 and the valve spindle 24 is possible.

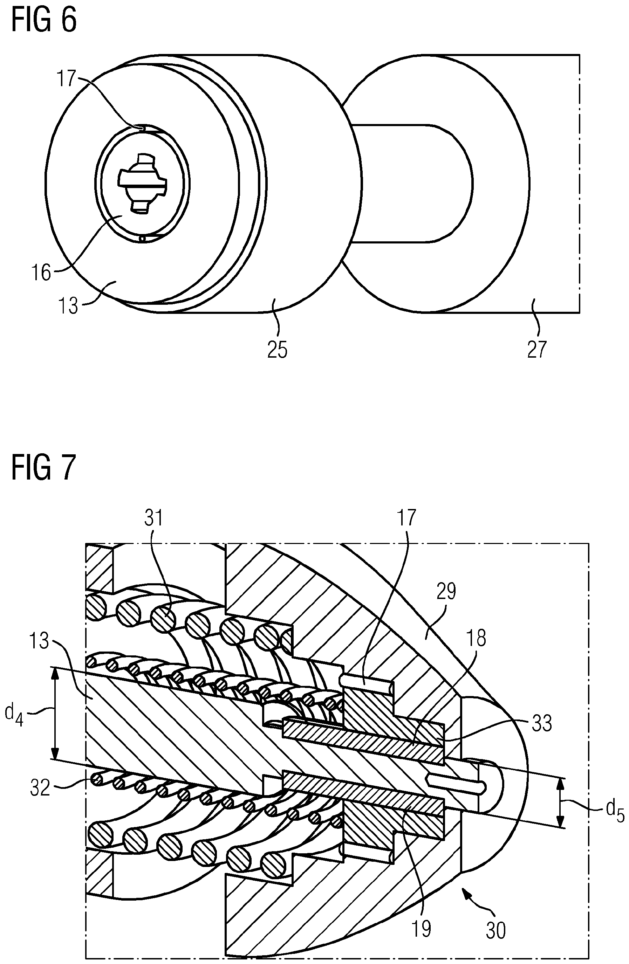

Fig. 6 shows a perspective illustration of the first bush 16 and of the second valve spindle 13. The second valve spindle 13 has a third valve cone 25 which bears against a third valve seat 26 in the closed state. Arranged behind it in the longitudinal direction 6 is a fourth valve cone 27 which, in the closed state, bears against a fourth valve seat 28.

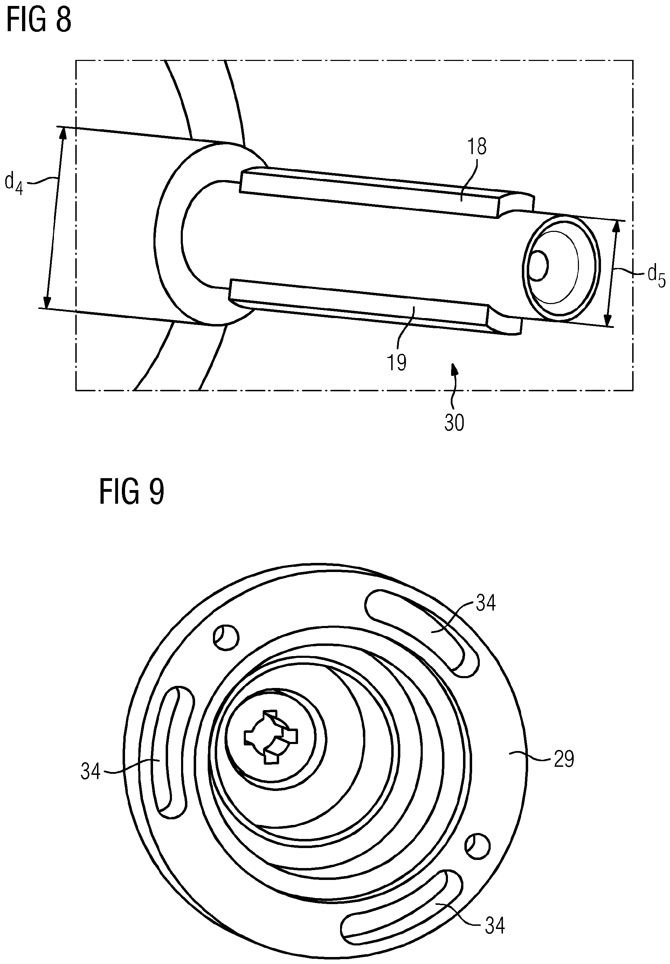

The valve spindle 23 is encased by a valve housing 29 in a longitudinal direction 6 behind the fourth valve cone 27. Here, the second valve spindle 13 comprises a first region with a diameter d4 and, arranged in a longitudinal direction behind it, a region with a diameter d5 (see figure 8). The diameter d5 is substantially approximately identical to the diameter d3. A cavity is arranged between the valve spindle 23 in the region of the diameter d4 and the valve housing 29. The fourth valve cone 27 and the region with the diameter d4 are formed in such a way that a spring can be arranged therein which projects from the fourth valve cone 27 along the longitudinal direction up to the valve housing 29 (not shown) .

Fig. 7 shows an enlarged illustration of a terminal end 30 of the second valve spindle 13. Here, fig. 7 shows a first spring 31 and a second spring 32. The first spring 31 and the second spring 32 exert a force on the valve housing 29 between the valve spindle 13 via the fourth valve cone 27. Here, just like the end of the first valve spindle 5, the valve spindle 13 has a first feather key 18 and a second feather key 19. These feather keys 18 and 19 are arranged in a second bush 33. The design of the first feather key 18 and of the second feather key 19 and also of the second bush 33 and of the pin 17 is identical to the embodiment according to figs. 2, 3 and 4. Reference should therefore be made at this point to the statements pertaining to the design of the terminal end 12 of the first valve spindle 5 and of the associated bush.

Fig. 8 shows the perspective view of the end of the second valve spindle 13.

Fig. 9 shows a perspective view of the valve housing 29. The valve housing 29 comprises three slots 34 which are designed to mount the valve housing 29 with a degree of leeway along a direction of rotation. Here, the second bush 33 is arranged with the valve housing 29 either by screwing, welding or shrink-fitting.

The mode of operation of the valve arrangement 1 occurs as follows:
First of all, the first valve spindle 5 moves from left to right. The second valve spindle 13 remains stationary here. The movement of the first valve spindle 5 from left to right opens the annular surfaces between the first valve cone 8 and the first valve seat 10 and between the second valve cone 9 and the second valve seat 11. Here, the steam flows from the inflow region 2 into the outflow region 3. If the first valve spindle 5 has covered a certain distance, specifically a distance which is such that the transition from the region with the diameter d2 to the region with the diameter d3 bears against the second bush 33 or second valve spindle 13, a force is exerted on the second valve spindle 13 from the first valve spindle 5 directly (without the spring force between the casing 15 and the first valve spindle 5). A further movement of the valve spindle 5 then leads to a movement of the second valve spindle 13 from left to right. Here, an annular surface between the third valve cone 25 and the third valve seat 26 and between the fourth valve cone 27 and the fourth valve seat 28 opens. As a result, the steam flows from the inflow region 2 into the second outflow region 4. Here, the feather keys 18 and 19 move relatively with respect to the bushes 16 and 33.

Although the invention has been illustrated and described in more detail by the preferred exemplary embodiment, the invention is not restricted by the disclosed examples and other variations can be derived therefrom by a person skilled in the art without departing from the scope of protection of the invention which is solely defined by the appended claims.

## Claims

1. A valve spindle arrangement (1)
comprising
a first valve spindle (5) and a first bush (16),
wherein the first valve spindle (5) and the first bush (16) are arranged so as to be displaceable relative to one another in a longitudinal direction (6),
further comprising at least one feather key (18) which is arranged on the first valve spindle (5),
wherein the feather key (18) projects into a recess (20) of the first bush (16) in such a way that a rotation of the first valve spindle (5) and of the bush (16) with respect to one another is prevented,
wherein
the first valve spindle (5) is formed from a first valve spindle material, and the first bush (16) is formed from a first bush material, and the feather key (18) is formed from a feather key material,
**characterized in that**
the feather key material is different from the first valve spindle material and/or the first bush material.

2. The valve spindle arrangement (1) as claimed in claim 1,
wherein the feather key material has a greater hardness than the first bush material and/or the first valve spindle material.

3. The valve spindle arrangement (1) as claimed in claim 2,
wherein the feather key material has a hardness which is greater by 20% to 40%, in particular by 25% to 35%, than the first bush material and the first valve spindle material.

4. The valve spindle arrangement (1) as claimed in claim 2 or 3,
wherein the feather key (18) is formed from stellite.

5. The valve spindle arrangement (1) as claimed in claim 2, 3 or 4,
wherein the first bush material is formed from stellite.

6. The valve spindle arrangement (1) as claimed in claim 4 or 5,
wherein stellite has the following composition:
| | |
|---|---|
| Cr: | 25 to 30% by weight |
| Mo: | max. 1% by weight |
| W: | 2 to 15% by weight |
| C: | 0.25 to 3.3% by weight |
| Fe: | max. 3% by weight |
| Ni: | max. 3% by weight |
| Si: | max. 2% by weight |
| Mn: | max. 1% by weight. |

7. The valve spindle arrangement (1) as claimed in one of the preceding claims,
wherein the first valve spindle (5) has a recess (20) in which the feather key (18) is arranged.

8. The valve spindle arrangement (1) as claimed in one of the preceding claims,
wherein the recess (20) is formed in such a way that the feather key (18) is not displaceable in the longitudinal direction (6) relative to the first valve spindle (5).

9. The valve spindle arrangement (1) as claimed in one of the preceding claims,
wherein the first valve spindle (5) comprises a second feather key (19), wherein the second feather key (19) is arranged opposite to the first feather key (18).

10. The valve spindle arrangement (1) as claimed in one of the preceding claims,
wherein the bush (16) is arranged in a second valve spindle (13) .

11. The valve spindle arrangement (1) as claimed in claim 10,
wherein the bush (16) is connected to the second valve spindle (13) in such a way that a rotation of the bush (16) relative to the second valve spindle (13) is prevented.

12. The valve spindle arrangement (1) as claimed in claim 11,
wherein the second valve spindle (13) has an end-side cavity (14), and the bush (16) is connected in this cavity (14) to the second valve spindle (13) by a shrink fit.

13. The valve spindle arrangement (1) as claimed in either of claims 5 and 6,
wherein at least one pin (17) for securing is arranged between the bush (16) and the second valve spindle (13).

14. The valve spindle arrangement (1) as claimed in one of claims 10 to 13,
wherein the second valve spindle (13) is provided on the end side with feather keys (18, 19) which engages in a second bush (33) in such a way that a rotation is prevented.

15. The valve spindle arrangement (1) as claimed in claim 14,
wherein the second bush (33) is fixedly connected to a valve housing (29).

16. The valve spindle arrangement (1) as claimed in one of claims 10 to 15,
wherein the feather key (18, 19) of the second valve spindle (13) is formed from a feather key material, and the second bush (33) is formed from a second bush material,
wherein the feather key material has a greater hardness than the second bush material and/or the second valve spindle material.

17. The valve spindle arrangement (1) as claimed in claim 16,
wherein the feather key material material has a hardness which is greater by 20% to 40%, in particular by 25% to 35%, than the second bush material.

18. The valve spindle arrangement (1) as claimed in claim 15 or 16,
wherein the second valve spindle (13) is formed from stellite.

19. The valve spindle arrangement (1) as claimed in claim 16, 17 or 18,
wherein the second bush (33) is formed from stellite.

20. The valve spindle arrangement (1) as claimed in claim 18 or 19,
wherein stellite has the following composition:
| | |
|---|---|
| Cr: | 25 to 30% by weight |
| Mo: | max. 1% by weight |
| W: | 2 to 15% by weight |
| C: | 0.25 to 3.3% by weight |
| Fe: | max. 3% by weight |
| Ni: | max. 3% by weight |
| Si: | max. 2% by weight |
| Mn: | max. 1% by weight. |

21. The valve spindle arrangement (1) as claimed in one of the preceding claims,
wherein a sleeve is arranged on the first valve spindle (5) between the first bush (16) and the first valve spindle (5), wherein the sleeve is formed from a material which has a greater hardness than the material from which the first valve spindle (5) is formed.

22. The valve spindle arrangement (21) as claimed in one of the preceding claims,
wherein a second sleeve is arranged on the second valve spindle (13) between the second bush (33) and the second valve spindle (13), wherein the second sleeve is formed from a material which has a greater hardness than the material from which the second valve spindle (13) is formed.

23. The valve spindle arrangement (1) as claimed in one of the preceding claims,
wherein the feather key (18, 19) is arranged releasably on the first valve spindle (5) and/or second valve spindle (13) .

24. A valve having a valve spindle arrangement as claimed in one of claims 1 to 20.

25. The valve as claimed in claim 21,
wherein the first valve spindle (5) is designed to move a first valve cone (8), and the second valve spindle (13) is designed to move a third valve cone (25).

## Patentansprüche

1. Ventilspindelanordnung (1), Folgendes umfassend
eine erste Ventilspindel (5) und eine erste Buchse (16),
wobei die erste Ventilspindel (5) und die erste Buchse (16) angeordnet sind, um relativ zueinander in einer Längsrichtung (6) verschiebbar zu sein,
weiterhin umfassend mindestens eine Feder (18), die auf der ersten Ventilspindel (5) angeordnet ist,
wobei die Feder (18) in eine Vertiefung (20) der ersten Buchse (16) auf eine derartige Weise vorsteht, dass eine Drehbewegung der ersten Ventilspindel (5) und der Buchse (16) zueinander verhindert wird,
wobei die erste Ventilspindel (5) aus einem ersten Ventilspindelmaterial ausgebildet ist und die erste Buchse (16) aus einem ersten Buchsenmaterial ausgebildet ist und die Feder (18) aus einem Federmaterial ausgebildet ist,
**dadurch gekennzeichnet, dass**
das Federmaterial von dem ersten Ventilspindelmaterial und/oder von dem ersten Buchsenmaterial verschieden ist.

2. Ventilspindelanordnung (1) nach Anspruch 1,
wobei das Federmaterial eine größere Härte als das erste Buchsenmaterial und/oder das erste Ventilspindelmaterial aufweist.

3. Ventilspindelanordnung (1) nach Anspruch 2,
wobei das Federmaterial eine Härte aufweist, die um 20 % bis 40 %, insbesondere um 25 % bis 35 %, größer ist als das erste Buchsenmaterial und das erste Ventilspindelmaterial.

4. Ventilspindelanordnung (1) nach Anspruch 2 oder 3,
wobei die Feder (18) aus Stellit ausgebildet ist.

5. Ventilspindelanordnung (1) nach Anspruch 2, 3 oder 4,
wobei das erste Buchsenmaterial aus Stellit ausgebildet ist.

6. Ventilspindelanordnung (1) nach Anspruch 4 oder 5,
wobei Stellit die folgende Zusammensetzung aufweist:
| | |
|---|---|
| Cr: | 25 bis 30 Masse-% |
| Mo: | max. 1 Masse-% |
| W: | 2 bis 15 Masse-% |
| C: | 0,25 bis 3,3 Masse-% |
| Fe: | max. 3 Masse-% |
| Ni: | max. 3 Masse-% |
| Si: | max. 2 Masse-% |
| Mn: | max. 1 Masse-%. |

7. Ventilspindelanordnung (1) nach einem der vorhergehenden Ansprüche,
wobei die erste Ventilspindel (5) eine Vertiefung (20) aufweist, in der die Feder (18) angeordnet ist.

8. Ventilspindelanordnung (1) nach einem der vorhergehenden Ansprüche,
wobei die Vertiefung (20) auf eine derartige Weise ausgebildet ist, dass die Feder (18) in Bezug auf die erste Ventilspindel (5) nicht in der Längsrichtung (6) verschiebbar ist.

9. Ventilspindelanordnung (1) nach einem der vorhergehenden Ansprüche,
wobei die erste Ventilspindel (5) eine zweite Feder (19) umfasst, wobei die zweite Feder (19) der ersten Feder (18) entgegengesetzt angeordnet ist.

10. Ventilspindelanordnung (1) nach einem der vorhergehenden Ansprüche,
wobei die Buchse (16) in einer zweiten Ventilspindel (13) angeordnet ist.

11. Ventilspindelanordnung (1) nach Anspruch 10,
wobei die Buchse (16) mit der zweiten Ventilspindel (13) auf eine derartige Weise verbunden ist, dass eine Drehbewegung der Buchse (16) relativ zu der zweiten Ventilspindel (13) verhindert wird.

12. Ventilspindelanordnung (1) nach Anspruch 11,
wobei die zweite Ventilspindel (13) einen Endseitenhohlraum (14) aufweist und die Buchse (16) in diesem Hohlraum (14) durch eine Schrumpfverbindung mit der zweiten Ventilspindel (13) verbunden ist.

13. Ventilspindelanordnung (1) nach entweder Anspruch 5 oder 6,
wobei mindestens ein Stift (17) zum Sichern zwischen der Buchse (16) und der zweiten Ventilspindel (13) angeordnet ist.

14. Ventilspindelanordnung (1) nach einem der Ansprüche 10 bis 13,
wobei die zweite Ventilspindel (13) mit Federn (18, 19) auf der Endseite bereitgestellt ist, die in eine zweite Buchse (33) auf eine derartige Weise eingreift, dass eine Drehbewegung verhindert wird.

15. Ventilspindelanordnung (1) nach Anspruch 14,
wobei die zweite Buchse (33) starr mit einem Ventilgehäuse (29) verbunden ist.

16. Ventilspindelanordnung (1) nach einem der Ansprüche 10 bis 15,
wobei die Feder (18, 19) der zweiten Ventilspindel (13) aus einem Federmaterial ausgebildet ist und die zweite Buchse (33) aus einem zweiten Buchsenmaterial ausgebildet ist,
wobei das Federmaterial eine größere Härte als das zweite Buchsenmaterial und/oder das zweite Ventilspindelmaterial aufweist.

17. Ventilspindelanordnung (1) nach Anspruch 16,
wobei das Federmaterial eine Härte aufweist, die um 20 % bis 40 %, insbesondere um 25 % bis 35 %, größer ist als das zweite Buchsenmaterial.

18. Ventilspindelanordnung (1) nach Anspruch 15 oder 16,
wobei die zweite Ventilspindel (13) aus Stellit ausgebildet ist.

19. Ventilspindelanordnung (1) nach Anspruch 16, 17 oder 18,
wobei die zweite Buchse (33) aus Stellit ausgebildet ist.

20. Ventilspindelanordnung (1) nach Anspruch 18 oder 19,
wobei Stellit die folgende Zusammensetzung aufweist:
| | |
|---|---|
| Cr: | 25 bis 30 Masse-% |
| Mo: | max. 1 Masse-% |
| W: | 2 bis 15 Masse-% |
| C: | 0,25 bis 3,3 Masse-% |
| Fe: | max. 3 Masse-% |
| Ni: | max. 3 Masse-% |
| Si: | max. 2 Masse-% |
| Mn: | max. 1 Masse-%. |

21. Ventilspindelanordnung (1) nach einem der vorhergehenden Ansprüche,
wobei eine Hülse auf der ersten Ventilspindel (5) zwischen der ersten Buchse (16) und der ersten Ventilspindel (5) angeordnet ist, wobei die Hülse aus einem Material angeordnet ist, das eine größere Härte aufweist als das Material, aus dem die erste Ventilspindel (5) ausgebildet ist.

22. Ventilspindelanordnung (21) nach einem der vorhergehenden Ansprüche,
wobei eine zweite Hülse auf der zweiten Ventilspindel (13) zwischen der zweiten Buchse (33) und der zweiten Ventilspindel (13) angeordnet ist, wobei die zweite Hülse aus einem Material angeordnet ist, das eine größere Härte aufweist als das Material, aus dem die zweite Ventilspindel (13) ausgebildet ist.

23. Ventilspindelanordnung (1) nach einem der vorhergehenden Ansprüche,
wobei die Feder (18, 19) lösbar auf der ersten Ventilspindel (5) und/oder der zweiten Ventilspindel (13) angeordnet ist.

24. Ventil mit einer Ventilspindelanordnung nach einem der Ansprüche 1 bis 20.

25. Ventil nach Anspruch 21,
wobei die erste Ventilspindel (5) entworfen ist, um einen ersten Ventilkegel (8) zu bewegen, und die zweite Ventilspindel (13) entworfen ist, um einen dritten Ventilkegel (25) zu bewegen.

## Revendications

1. Agencement de tige de soupape (1) comprenant :
une première tige de soupape (5) et un premier coussinet (16),
dans lequel la première tige de soupape (5) et le premier coussinet (16) sont agencés de façon à pouvoir être déplacés l'un par rapport à l'autre dans une direction longitudinale (6),
comprenant en outre au moins une clavette (18) qui est agencée sur la première tige de soupape (5),
dans lequel la clavette (18) se projette dans une cavité (20) du premier coussinet (16) de façon à empêcher une rotation de la première tige de soupape (5) et du coussinet (16) l'une par rapport à l'autre,
dans lequel la première tige de soupape (5) est formée à partir d'un matériau de la première tige de soupape, et le premier coussinet (16) est formé à partir d'un matériau du premier coussinet, et la clavette (18) est formée à partir d'un matériau de la clavette,
**caractérisé en ce que** le matériau de la clavette est différent du matériau de la première tige de soupape et/ou du matériau du premier coussinet.

2. Agencement de tige de soupape (1) selon la revendication 1, dans lequel le matériau de la clavette présente une dureté supérieure au matériau du premier coussinet et/ou au matériau de la première tige de soupape.

3. Agencement de tige de soupape (1) selon la revendication 2, dans lequel le matériau de la clavette présente une dureté qui est supérieure de 20 % à 40 %, en particulier de 25 % à 35 %, au matériau du premier coussinet et au matériau de la première tige de soupape.

4. Agencement de tige de soupape (1) selon la revendication 2 ou 3,
dans lequel la clavette (18) est formée à partir de stellite.

5. Agencement de tige de soupape (1) selon la revendication 2, 3 ou 4,
dans lequel le matériau du premier coussinet est formé à partir de stellite.

6. Agencement de tige de soupape (1) selon la revendication 4 ou 5,
dans lequel la stellite présente la composition suivante :
| | |
|---|---|
| Cr | : 25 à 30 % en poids |
| Mo | : maximum 1 % en poids |
| W | : 2 à 15 % en poids |
| C | : 0,25 à 3,3 % en poids |
| Fe | : maximum 3 % en poids |
| Ni | : maximum 3 % en poids |
| Si | : maximum 2 % en poids |
| Mn | : maximum 1 % en poids. |

7. Agencement de tige de soupape (1) selon l'une quelconque des revendications précédentes,
dans lequel la première tige de soupape (5) présente une cavité (20) dans laquelle la clavette (18) est agencée.

8. Agencement de tige de soupape (1) selon l'une quelconque des revendications précédentes,
dans lequel la cavité (20) est formée de sorte que la clavette (18) ne puisse pas être déplacée dans la direction longitudinale (6) par rapport à la première tige de soupape (5).

9. Agencement de tige de soupape (1) selon l'une quelconque des revendications précédentes,
dans lequel la première tige de soupape (5) comprend une seconde clavette (19), dans lequel la seconde clavette (19) est agencée à l'opposé de la première clavette (18).

10. Agencement de tige de soupape (1) selon l'une quelconque des revendications précédentes,
dans lequel le coussinet (16) est agencé dans une seconde tige de soupape (13).

11. Agencement de tige de soupape (1) selon la revendication 10,
dans lequel le coussinet (16) est raccordé à la seconde tige de soupape (13) de façon à empêcher une rotation du coussinet (16) par rapport à la seconde tige de soupape (13).

12. Agencement de tige de soupape (1) selon la revendication 11,
dans lequel la seconde tige de soupape (13) présente une cavité (14) du côté de l'extrémité, et le coussinet (16) est raccordé dans cette cavité (14) à la seconde tige de soupape (13) par un ajustement fretté.

13. Agencement de tige de soupape (1) selon l'une des revendications 5 et 6,
dans lequel au moins une broche (17) de fixation est agencée entre le coussinet (16) et la seconde tige de soupape (13).

14. Agencement de tige de soupape (1) selon l'une quelconque des revendications 10 à 13,
dans lequel la seconde tige de soupape (13) est dotée sur le côté d'extrémité de clavettes (18, 19) qui se mettent en prise dans un second coussinet (33) de façon à éviter une rotation.

15. Agencement de tige de soupape (1) selon la revendication 14,
dans lequel le second coussinet (33) est raccordé de manière fixe à un logement de soupape (29).

16. Agencement de tige de soupape (1) selon l'une quelconque des revendications 10 à 15,
dans lequel la clavette (18, 19) de la seconde tige de soupape (13) est formée à partir d'un matériau de clavette, et le second coussinet (33) est formé à partir d'un matériau de second coussinet, dans lequel le matériau de clavette présente une dureté supérieure au matériau du second coussinet et/ou au matériau de la seconde tige de soupape.

17. Agencement de tige de soupape (1) selon la revendication 16,
dans lequel le matériau de la clavette présente une dureté qui est supérieure de 20 % à 40 %, en particulier de 25 % à 35 %, au matériau du second coussinet.

18. Agencement de tige de soupape (1) selon la revendication 15 ou 16,
dans lequel la seconde tige de soupape (13) est formée à partir de stellite.

19. Agencement de tige de soupape (1) selon la revendication 16, 17 ou 18,
dans lequel le second coussinet (33) est formé à partir de stellite.

20. Agencement de tige de soupape (1) selon la revendication 18 ou 19,
dans lequel la stellite présente la composition suivante :
| | |
|---|---|
| Cr | : 25 à 30 % en poids |
| Mo | : maximum 1 % en poids |
| W | : 2 à 15 % en poids |
| C | : 0,25 à 3,3 % en poids |
| Fe | : maximum 3 % en poids |
| Ni | : maximum 3 % en poids |
| Si | : maximum 2 % en poids |
| Mn | : maximum 1 % en poids. |

21. Agencement de tige de soupape (1) selon l'une quelconque des revendications précédentes,
dans lequel un manchon est agencé sur la première tige de soupape (5) entre le premier coussinet (16) et la première tige de soupape (5), dans lequel le manchon est formé à partir d'un matériau qui présente une dureté supérieure au matériau à partir duquel est formé la première tige de soupape (5).

22. Agencement de tige de soupape (21) selon l'une quelconque des revendications précédentes,
dans lequel un second manchon est agencé sur la seconde tige de soupape (13) entre le second coussinet (33) et la seconde tige de soupape (13), dans lequel le second manchon est formé à partir d'un matériau qui présente une dureté supérieure au matériau à partir duquel la seconde tige de soupape (13) est formée.

23. Agencement de tige de soupape (1) selon l'une quelconque des revendications précédentes,
dans lequel la clavette (18, 19) est agencée de manière détachable sur la première tige de soupape (5) et/ou la seconde tige de soupape (13).

24. Soupape dotée d'un agencement de tige de soupape selon l'une quelconque des revendications 1 à 20.

25. Soupape selon la revendication 21,
dans laquelle la première tige de soupape (5) est conçue afin de déplacer un premier cône de soupape (8), et la seconde tige de soupape (13) est conçue afin de déplacer un troisième cône de soupape (25).
